# EUROPÄISCHE PATENTSCHRIFT

(11) **EP 0 787 087 B1**
(45) Veröffentlichungstag und Bekanntmachung des Hinweises auf die Patenterteilung: **26.08.1998**
(21) Anmeldenummer: 95918520.8
(22) Anmeldetag: 09.05.1995
(51) Int. Cl.: B60T 13/68, B60T 15/36

(54) **UMSCHALTVENTIL FÜR MEHRKREISIGE BREMSANLAGEN VON KRAFTFAHRZEUGEN**
REVERSING VALVE FOR MULTI-CIRCUIT BRAKE SYSTEMS IN MOTOR VEHICLES
SOUPAPE D'INVERSION POUR SYSTEMES DE FREINAGE A PLUSIEURS CIRCUITS D'AUTOMOBILES

(30) Priorität: 25.10.1994 DE 4438154
(43) Veröffentlichungstag der Anmeldung: 06.08.1997
(73) Patentinhaber: KNORR-BREMSE Systeme für Nutzfahrzeuge GmbH, 80809 München (DE)
(72) Erfinder: FRIES, Ansgar, D-80993 München (DE); VOLLMER, Otto, D-80689 München (DE)
(74) Vertreter: von Bülow, Tam, Dr.
(86) Internationale Anmeldenummer: DE9500629
(87) Internationale Veröffentlichungsnummer: WO9612635

(56) Entgegenhaltungen:
- EP-A- 0 422 345
- DE-A- 2 619 901

## Beschreibung

Die Erfindung bezieht sich auf ein Umschaltventil für mehrkreisige Bremsanlagen für Kraftfahrzeuge gemäß dem Oberbegriff des Patentanspruches 1.

Die DE 40 30 361 A1 und die dazu parallele EP 0 477 519 A1 beschreiben ein elektro-pneumatisches Bremssystem, das zum Umschalten zwischen elektrisch gesteuerter und pneumatisch gesteuerter Bremse ein Relaisventil (9 in der einzigen Figur) verwendet. Generell muß bei elektro-pneumatischen Bremsen sichergestellt sein, daß bei Ausfall der elektronischen Steuerung oder sonstiger elektrischer Bauteile zumindest die herkömmliche pneumatische Bremsfunktion voll erhalten bleibt. Zu diesem Zwecke hat das Fahrerbremsventil sowohl eine elektrische Komponente, nämlich einen Sensor, der die Stellung des Bremspedales abfragt und ein Bremsanforderungssignal an die elektronische Steuerung weitergeht, die dann gemäß vorgegebenen Parametern elektrische Stellsignale an Proportionalventile gibt, die den eigentlichen pneumatischen Bremsdruck in den Bremszylindern einsteuert. Weiter hat das Fahrerbremsventil eine rein pneumatische Komponente, die in Abhängigkeit von der Stellung des Bremspedales rein pneumatisch einen Bremsdruck ansteuert. Der vorrangige Bremskreis ist der elektronische Bremskreis. Bei Ausfall desselben wird jedoch automatisch auf die rein pneumatische Bremse umgeschaltet. Das bei den genannten Druckschriften verwendete Relaisventil für die Umschaltung ist im Prinzip ein Sitzventil, das in seinem Aufbau kompliziert und damit teuer ist.

Weiterhin werden Umschaltventile der eingangs genannten Art auch bei Bremsanlagen mit zwei pneumatischen Bremskreisen verwendet mit der Aufgabe, bei normalen Betriebsbedingungen den vorrangigen Bremskreis an einen entsprechenden Aktuator weiterzuleiten, im nicht normalen Betriebszustand den zweitrangigen Bremskreis weiterzuleiten. Da in diesem Ventil zwei voneinander unabhängige Bremskreise zusammengeführt werden, muß sichergestellt sein, daß etwaige Undichtigkeiten zwischen den Kreisen an Atmosphärendruck entlüftet werden. Grundsätzlich ist also ein solches Umschaltventil einsetzbar an:
- den Schnittstellen zwischen zwei pneumatischen Bremskreisen;
- in elektro-pneumatischen Bremsanlagen (EBS-Anlagen) wo zur Sicherheit ein pneumatischer Kreis nur bei Ausfall des elektronischen Kreises wirken soll und
- für den Einsatz im Zugfahrzeug und im Anhänger.

In einem Aufsatz von Jürgen Wrede und Heinz Decker "Brake by Wire for Commercial Vehicles", veröffentlicht auf der "International Truck and Bus-Meeting and Exposion", Toledo, Ohio, 16.-19.11.1992, (veröffentlicht in SAE TECHNICAL PAPER SERIES Nr. 922489) ist auf Seite 5 ein elektro-pneumatisches Bremssystem beschrieben, bei der die Entkopplung der beiden Drücke der beiden Kreise durch ein Relaisventil mit doppelter Dichtung und entlüfteter innerer Kammer erfolgt.

Aufgabe der Erfindung ist es, ein Umschaltventil zu schaffen, das bei vereinfachtem Aufbau zuverlässig über eine lange Betriebsdauer arbeitet.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Generell ist das Umschaltventil nach der Erfindung als Schieberventil konzipiert und ermöglicht dadurch einen sehr einfachen Aufbau, bestehend aus einem Kolben mit Dichtungen, vorzugsweise O-Ringen, einer Rückstellfeder und einem Gehäuse, das mehrere Bohrungen aufweist. Die Zweikreisigkeit wird durch eine Doppelabdichtung mit Luftableitung nach außen gelöst. Durch die Ausbildung des Umschaltventiles als Schieberventil erhält man sehr kleine Schaltdrücke, da die O-Ring-Dichtungen nur eine geringe Reibung aufweisen. Darüber hinaus ist der Schaltdruck, der vom ersten Kreis bereitgestellt wird, praktisch unabhängig von dem im zweiten Kreis herrschenden Druck.

Da die Doppelabdichtung beim Schalten des Ventiles an einer Gehäusebohrung entlanggleitet, um die Entkopplung der beiden Kreise und die Entlüftung zur Atmosphäre sicherzustellen, hängt die Lebensdauer des Ventiles von dem Verschleiß der Doppelabdichtung ab. Nach einer Weiterbildung der Erfindung ist daher vorgesehen, den Kolben des Ventiles mit flügelartigen Leitschaufeln zu versehen und den steuerdruck für das Umschalten des Ventiles so einzuleiten, daß ein Strömungsimpuls die Leitschaufeln beaufschlagt und dadurch den Kolben bei jeder Betätigung etwas dreht, womit auch die O-Ringe gedreht werden und somit der Verschleiß gleichmäßig von der gesamten Umfangsfläche der O-Ringe

Nach einer weiteren Ausgestaltung der Erfindung hat das Umschaltventil einen eigenen Einlaß, dem Druckmittel nur für das Umschalten des Ventiles zugeführt wird. Hiermit kann sichergestellt werden, daß bei jeder Bremsbetätigung der volle Vorratsdruck für das Umschalten verwendet wird. In vielen Fällen wird es aber auch ausreichen, den eingesteuerten Bremsdruck für das Umschalten des Ventiles auszunutzen.

Im folgenden wird die Erfindung anhand von Ausführungsbeispielen im Zusammenhang mit der Zeichnung ausführlicher erläutert. Es zeigt:
- Fig. 1: Einen Querschnitt des Umschaltventils nach der Erfindung in Ruhestellung;
- Fig. 2: einen Querschnitt des Umschaltventils nach der Erfindung in Arbeitsstellung;
- Fig. 3: einen Schnitt längs der Linie I-I der Fig. 2;
- Fig. 4: einen Querschnitt ähnlich Fig. 1 eines Umschaltventils in Ruhestellung nach einem weiteren Ausführungsbeispiel der Erfindung;
- Fig. 5: einen Querschnitt des Umschaltventils der Fig. 4 in Arbeitsstellung;
- Fig. 6: ein Prinzipschaltbild einer zweikreisigen Bremsanlage mit zwei Umschaltventilen nach der Erfindung;
- Fig. 7: einen Querschnitt eines Umschaltventils nach einer weiteren Ausgestaltung der Erfindung; und
- Fig. 8: ein Prinzipschaltbild einer zweikreisigen Bremsanlage in einer anderen Konfiguration mit einem Umschaltventil nach der Erfindung.

Gleiche Bezugszeichen in den einzelnen Figuren bezeichnen gleiche bzw. funktionell einander entsprechende Teile.

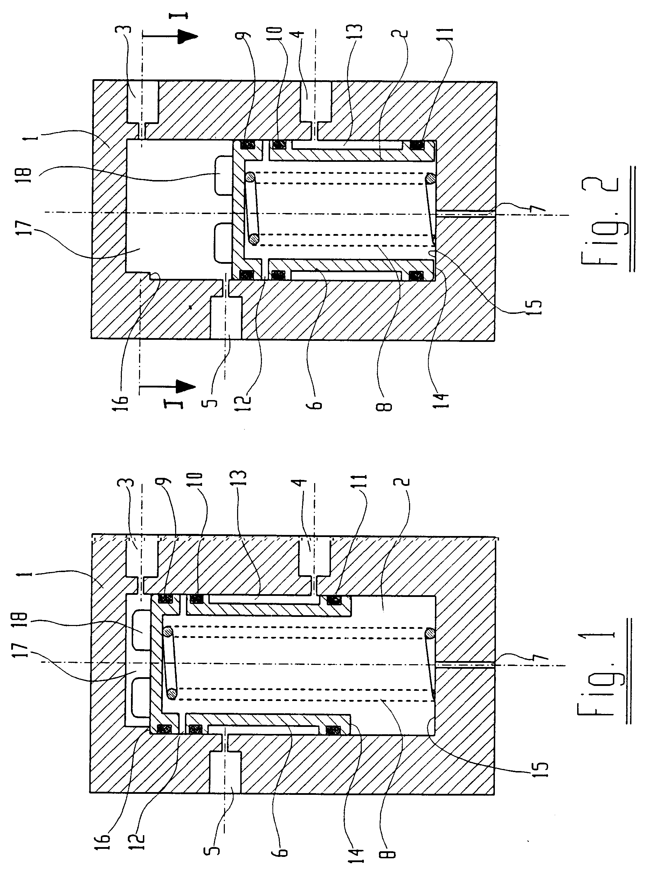

Zunächst wird auf Fig. 1 Bezug genommen. Das Umschaltventil besitzt ein Gehäuse 1, das in seinem Inneren eine zylindrische Kammer 2 aufweist. Das Gehäuse 1 hat insgesamt vier Öffnungen zu der Kammer 2, nämlich eine Einlaßöffnung 3, eine zweite Einlaßöffnung 4, eine Auslaßöffnung 5 und eine Entlüftungsöffnung 7. Im Ausführungsbeispiel der Fig. 1 münden die Öffnungen 4 und 5 radial in die Kammer 2, während die Entlüftungsöffnung 7 axial das Gehäuse durchdringt. Die Öffnung 3 mündet exzentrisch in die Kammer 2. Die Öffnungen 3, 4 und 5 sind in Axialrichtung gegeneinander versetzt. Zusätzlich sind die Öffnungen 4 und 5 in Umfangsrichtung gegeneinander versetzt. Im Inneren der Kammer 2 ist ein zylindrischer Kolben 6 verschieblich geführt und durch eine Feder 8 in eine erste Grenzstellung (Fig. 1) verschoben. Der Außenumfang des Kolbens 6 ist gegenüber der Innenwand der Kammer 2 über drei Dichtungen 9, 10 und 11 abgedichtet, die hier als O-Ring-Dichtungen ausgebildet sind. Die Dichtungen sind jeweils in Ringnuten des Kolbens 6 gehalten. Die beiden erstgenannten Dichtungen 9 und 10 liegen relativ nahe zueinander. Zwischen ihnen weist der Kolben 6 mehrere Bohrungen 12 auf, durch welche das Innere des Kolbens, in welchem auch die Feder 8 angeordnet ist, zugänglich ist. Es kann auch nur eine einzige Bohrung 12 vorgesehen sein, die mit einer ringförmigen - nicht dargestellten - Vertiefung an der Außenfläche des Kolbens 6 in Verbindung steht, womit auch sichergestellt ist, daß bei jeder beliebigen Drehstellung des Kolbens 6 sein Innenraum mit der Öffnung 5 in Strömungsverbindung steht, wenn diese ringförmige Vertiefung mit der Öffnung 5 ausgefluchtet ist.

Zwischen den Dichtungen 10 und 11 weist der Kolben 6 eine ringförmige Ausnehmung auf, die zusammen mit der Innenwand der Kammer 2 einen länglichen Ringraum 13 bildet. Dieser Ringraum ist also durch die Wandung des Kolbens 6 und die Dichtungen 10 und 11 gegenüber der Kammer 2 abgedichtet.

Der Kolben 6 ist gegen die Kraft der Feder 8 innerhalb der Kammer 2 in Axialrichtung verschieblich, bis ein Ende 14 des Kolbens 6 gegen den Boden 15 der Kammer 2 zum Anschlag kommt. Weiter hat das Gehäuse 1 im Inneren der Kammer 2 gegenüberliegend zum Boden 15 einen als Anschlag 16 dienenden Vorsprung, gegen den der Kolben durch die Feder 8 gedrückt wird. In der in Fig. 1 dargestellten Ruhestellung ist der Boden des Kolbens 2 gegen diesen Anschlag 16 gedrückt, wobei zwischen der Kolbenfläche und der gegenüberliegenden Gehäusewandung eine zweite Kammer 17 gebildet ist, in welche die Einlaßöffnung 3 mündet. Die Einlaßöffnung 4 mündet in den Ringraum 13, und zwar derart, daß in allen Lagen des Kolbens 6 einschließlich der beiden Grenzlagen der Fig. 1 und 2 der Ringraum 13 ständig mit der Einlaßöffnung 4 in Verbindung steht.

Die Auslaßöffnung 5 ist - in Axialrichtung gesehen - zwischen den Öffnungen 3 und 4 angeordnet. In der Ruhestellung der Fig. 1 mündet sie ebenfalls in den Ringraum 13 und steht damit mit der Einlaßöffnung 4 in Strömungsverbindung. In der Arbeitsstellung des Kolbens (Fig. 2) mündet die Öffnung 5 dagegen in die Kammer 17 und steht damit mit der Einlaßöffnung 3 in Strömungsverbindung. Je nach Stellung des Kolbens 2 wird also die Auslaßöffnung 5 entweder mit der Einlaßöffnung 4 oder der Einlaßöffnung 3 verbunden. Die beiden Einlaßöffnungen 3 und 4 sind dagegen ständig durch die Dichtungen 9 und 10 voneinander abgetrennt, so daß die beiden Druckmittelkreise der Bremsanlage ständig voneinander getrennt sind.

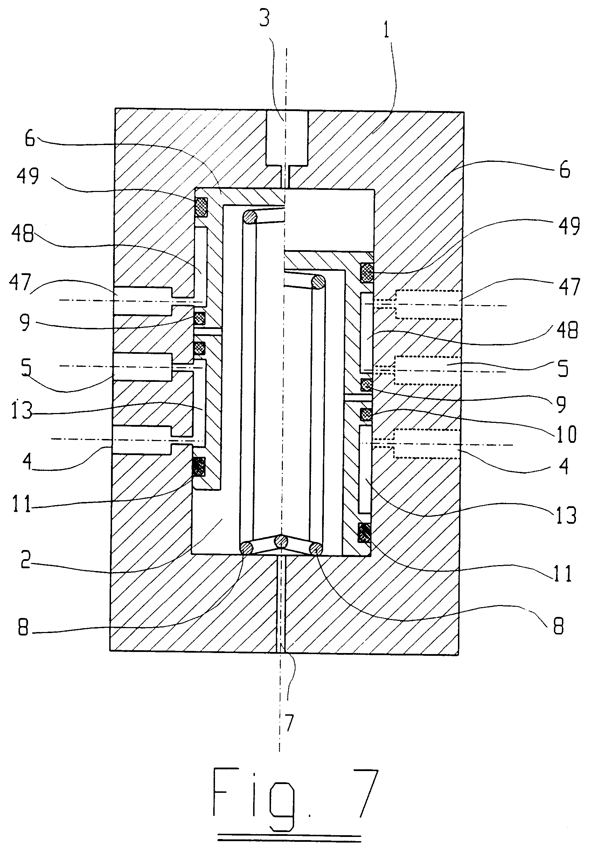

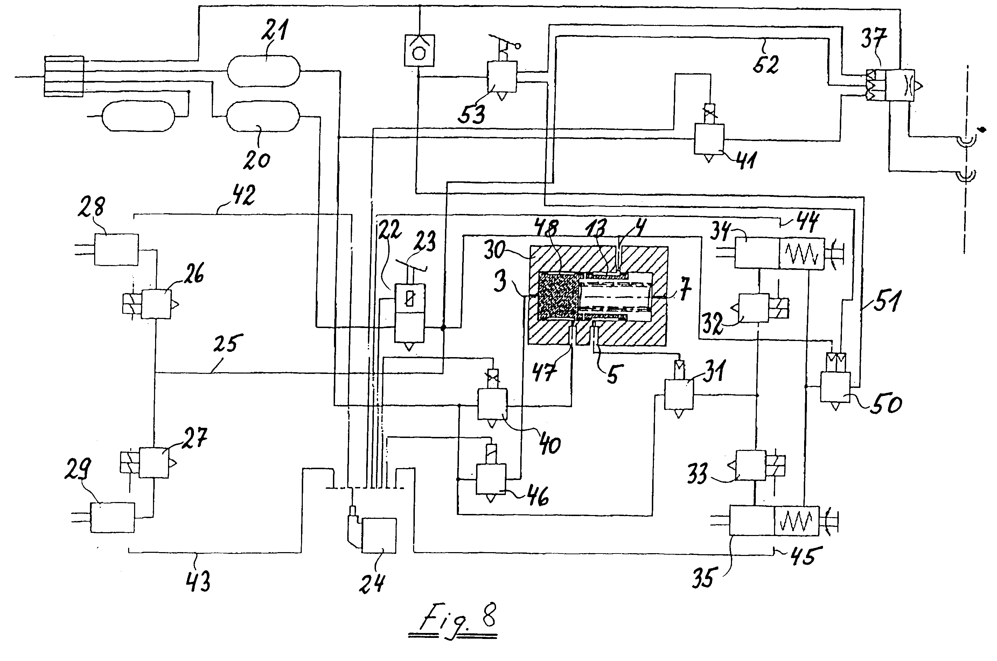

Wenn der Kolben 2 von der einen in die andere Stellung verschoben wird, so fluchtet eine der Bohrungen 12 kurzzeitig mit der Öffnung 5, so daß diese über eine der Bohrungen 12 mit dem Innenraum des Kolbens und damit mit der Kammer 2 in Strömungsverbindung kommt. Da die Kammer 2 über die Entlüftungsöffnung 7 mit Atmosphäre in Verbindung steht, wird während dieses Umschaltvorganges die Öffnung 5 mit Atmosphäre verbunden, so daß der an diese Öffnung angeschlossene Bremskreis entlüftet wird, was im einzelnen noch mit Fig. 6 und 7 erläutert wird.

Da die Dichtungen 9 und 10 beim Verschieben des Kolbens 6 an der relativ scharfen Kante der Auslaßöffnung 5 vorbeigleiten besteht die Gefahr, daß die als Dichtungen verwendeten O-Ringe schnell verschleißen. Nach einer Weiterbildung der Erfindung ist zur Verlängerung der Lebensdauer vorgesehen, daß am Kolbenboden mehrere in die Kammer 17 hineinragende Flügel 18 angebracht sind, die eine Drehung des Kolbens bewirken, wenn Druckmittel bzw. Druckluft durch die Öffnung 3 in die Kammer 17 strömt. Die O-Ringe drehen sich dabei mit dem Kolben 6, so daß sie beim Gleiten über die Bohrung der Auslaßöffnung 5 immer eine andere Position haben. Der Verschleiß der O-Ringe verteilt sich somit über deren gesamten Außenumfang, was die Lebensdauer des Umschaltventiles erhöht. Darüber hinaus ist die Verwendung von O-Ringen als Dichtung auch vorteilhaft, da sie eine relativ geringe Reibung haben und damit das Ventil schon bei relativ niedrigen Drücken umschaltet.

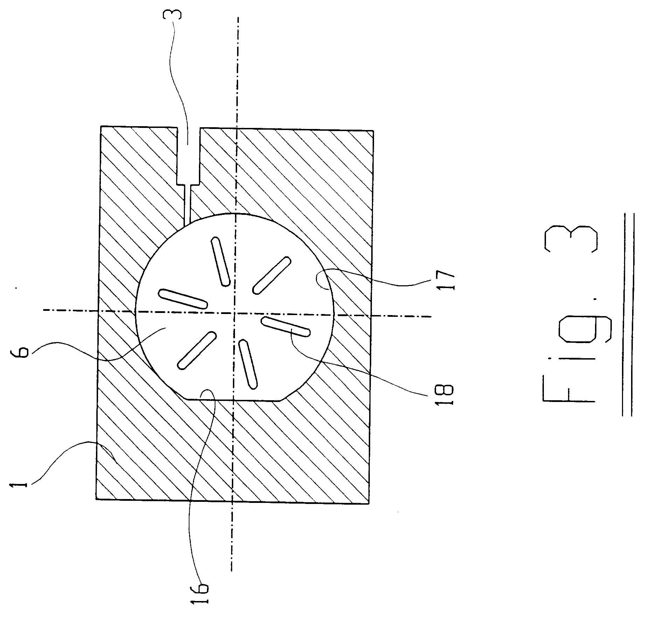

Fig. 3 verdeutlicht noch besser die Anordnung der als Leitschaufeln dienenden Flügel sowie den als Anschlag dienenden Vorsprung 16, der die Bewegung des Kolbens begrenzt. Auch ist zu erkennen, daß die Öffnung 3 exzentrisch zur Mittelachse angeordnet ist, um die Flügel 18 mit einem den Kolben 6 drehenden Impuls zu beaufschlagen.

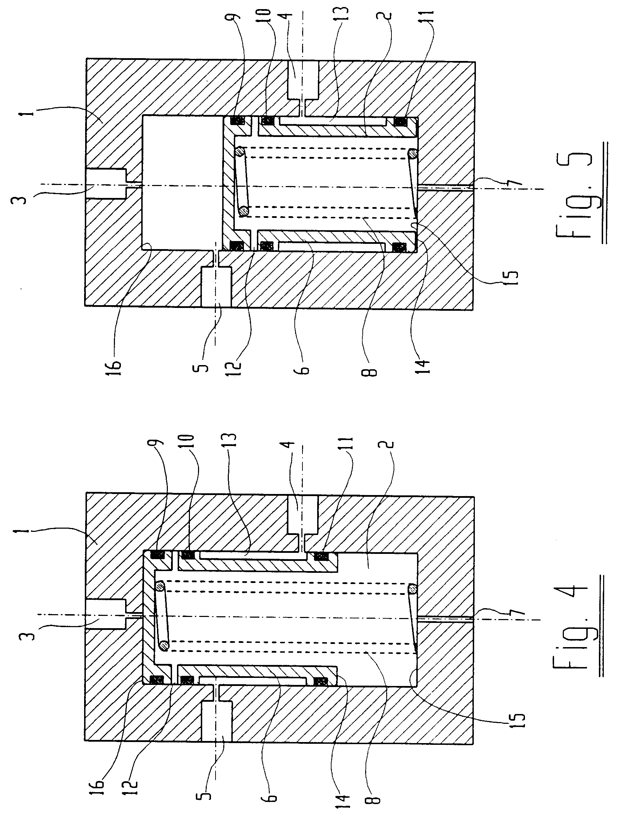

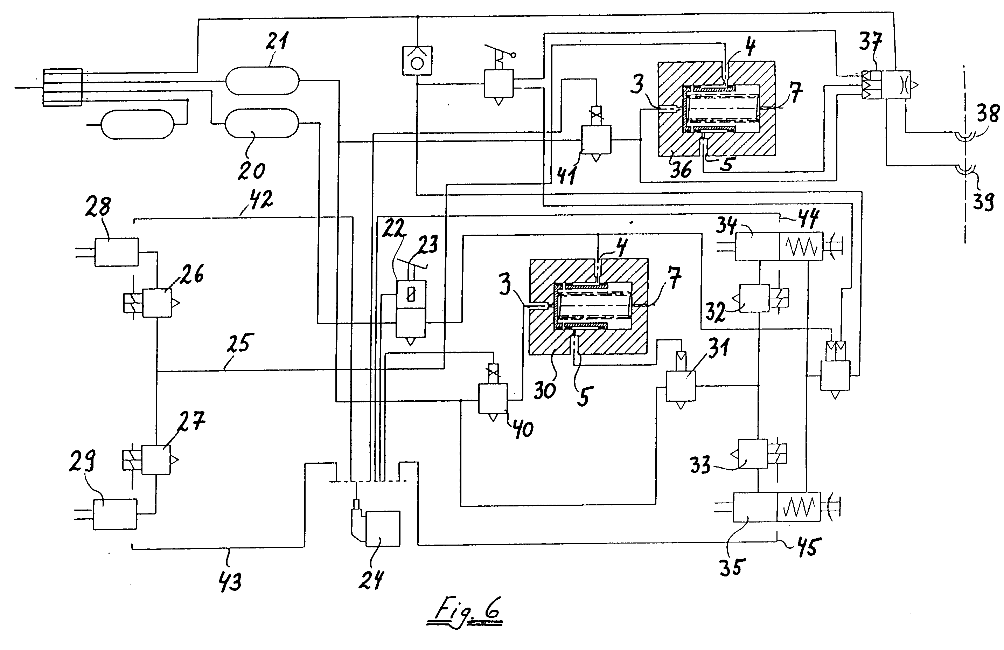

Das Ausführungsbeispiel der Fig. 4 und 5 unterscheidet sich von denen der Fig. 1 und 2 dadurch, daß die Flügel 18 fortgelassen sind, so daß die Baulänge des Umschaltventils kürzer sein kann. Weiter ist bei diesem Ausführungsbeispiel die Einlaßöffnung 3 symmetrisch zur Mittelachse angeordnet, d.h. in Axialrichtung. Im übrigen stimmen die Ausführungsbeispiele der Fig. 1 und 2 mit denen der Fig. 4 und 5 überein.

Fig. 6 zeigt einen Anwendungsfall der Umschaltventile bei einer zweikreisigen Bremsanlage für Lastkraftwagen mit Anhängern. Die Anlage besitzt einen ersten Druckluftbehälter 20 für den Vorderachskreis und einen zweiten Druckluftbehälter 21 für den Hinterachskreis. Der vorrangige Bremskreis ist der Vorderachskreis. Der erste Druckluftbehälter 20 ist pneumatisch mit einem Fahrerbremsventil 22 verbunden, das elektrische und pneumatische Bremsfunktionen in sich vereint. Zum einen wird die Stellung des Bremspedales 23 elektrisch abgetastet und einem elektronischen Steuergerät 24 zugeführt. Zum anderen wird für den Fehlerfall des elektronischen Steuergerätes ein von der Pedalstellung abhängiger Bremsdruck über den pneumatischen Teil des Fahrerbremsventiles 22 auf eine pneumatische Leitung 25 gegeben und gelangt damit zu Bremsventilen 26 und 27 für die beiden Räder der Vorderachse und von dort zu den pneumatisch betätigbaren Bremszylindern 28 und 29. Weiter gelangt dieser Druck an die Einlaßöffnung 4 eines ersten Umschaltventiles 30, das gemäß den oben beschriebenen Ausführungsbeispielen ausgebildet ist. Für den Fall, daß die elektrische Bremse ausgefallen ist, bleibt das Umschaltventil 30 in der dargestellten Ruhestellung und der eingesteuerte Druck gelangt von der Einlaßöffnung 4 über den Ringraum zur Auslaßöffnung 5 und von dort zu dem Steuereingang eines Relaisventiles 31. Der Druckmitteleingang dieses Relaisventiles 31 ist mit dem zweiten Druckluftbehälter für den Hinterachskreis verbunden; sein Ausgang ist mit Bremsventilen 32 und 33 für die Hinterachsbremse verbunden, welche Federspeicherzylinder 34 und 35 für die beiden Räder der Hinterachse ansteuern.

In ähnlicher Weise gelangt der am Fahrerbremsventil eingesteuerte Druck an die Einlaßöffnung 4 eines zweiten Umschaltventiles 36 für die Anhängerbremse und über den Auslaß 5 zu einem Anhängersteuerventil 37, das ein Relaisventil enthält und über zwei Anschlüsse 38 und 39 mit den Anhängern des Fahrzeuges koppelbar ist.

Ist der elektrische Teil der Bremse in Ordnung, so wird das elektrische Steuergerät 24 ein der Bremsanforderung entsprechendes Signal an ein elektrisch gesteuertes Ventil 40 liefern, dessen pneumatischer Eingang mit dem zweiten Druckluftbehälter 21 und dessen pneumatischer Ausgang mit der Einlaßöffnung 3 des ersten Umschaltventiles 30 verbunden ist. In gleicher Weise wird das Steuergerät 24 ein elektrisches Signal an ein elektrisch gesteuertes Ventil 41 für die Anhängerbremse liefern, dessen pneumatischer Eingang ebenfalls mit dem zweiten Druckluftbehälter 21 und dessen Ausgang mit der Einlaßöffnung 3 des zweiten Umschaltventiles 36 verbunden ist. An beiden Einlaßöffnungen 3 der Umschaltventile 30 und 36 liegt somit ein dem eingesteuerten Bremsdruck proportionaler pneumatischer Druck an, der die Ventile 30 und 36 in ihre Arbeitsstellung umschaltet, d.h. jeweils die Einlaßöffnung 3 mit der Auslaßöffnung verbindet. Damit gelangt für die Hinterachse dieser elektrisch gesteuerte Druck an den Steuereingang des Relaisventiles 31 und damit zu den Hinterachsbremsen. In gleicher Weise gelangt dieser elektrisch gesteuerte Druck über das Umschaltventil 36 zu dem Anhängersteuerventil 37.

Durch elektrische Leitungen 42, 43, 44 und 45 vom elektrischen Steuergerät zu den Bremsanlagen aller vier Räder ist angedeutet, daß das Steuergerät die einzelnen Bremsen auch individuell steuern kann, wie es beispielsweise für eine Blockierschutzfunktion, eine Antriebsschlupfregelung oder eine lastabhängige Bremsung erforderlich ist. Die pneumatischen Drücke werden aber auch hierbei von den beiden Druckluftbehältern 20 und 21 bereitgestellt.

Bei derartigen Bremsanlagen ist eine wichtige Forderung, daß beide Kreise voneinander getrennt sind und im einen Kreis eingesteuerte Drücke nicht in den anderen Kreis gelangen. Zu diesem Zwecke ist die im Zusammenhang mit den Fig. 1 bis 5 beschriebene Bohrung 12 vorgesehen, die sicherstellt, daß ein vom einen Kreis eingesteuerter Druck an der Auslaßöffnung 5 des Umschaltventiles nicht in den anderen Kreis gelangt. In der Ruhestellung des Umschaltventiles führt die Auslaßöffnung 5 den an der Einlaßöffnung 4 vom ersten Druckluftbehälter 20 stammende Druck. In der Arbeitsstellung führt die Öffnung 5 des Umschaltventiles 30 den an der Einlaßöffnung 3 herrschenden, vom zweiten Druckluftbehälter 21 stammenden Druck. Dadurch, daß beim Umschalten des Ventiles die Bohrung 12 an der Auslaßöffnung 5 vorbeigleitet, wird diese kurzfristig über die Entlüftungsöffnung 7 zur Atmosphäre hin entlüftet, so daß Druckeinkopplungen vom einen Kreis in den anderen Kreis vermieden werden.

Die weiteren in Fig. 6 dargestellten und nicht näher angesprochenen Bauteile sind übliche Komponenten von zweikreisigen Bremsanlagen, die im Zusammenhang mit der vorliegenden Erfindung keiner detaillierteren Erläuterung bedürfen.

Fig. 7 zeigt ein Umschaltventil nach einer weiteren Variante der Erfindung. Dort ist im linken Teil der Zeichnung der Kolben 6 in Ruhestellung und im rechten Teil der Zeichnung in Arbeitsstellung. Die Öffnungen 4, 5 und 47 sind zur besseren Übersichtlichkeit auch im rechten Teil der Zeichnung gestrichelt abgebildet, wobei darauf hingewiesen wird, daß diese Öffnungen insgesamt nur einmal vorhanden sind. Auch ist es für die Funktion des Umschaltventils unerheblich, wo diese drei Öffnungen um den Außenumfang verteilt angeordnet sind. Wichtig ist nur, daß ihr Abstand in Axialrichtung so gewählt ist, daß die funktionell benötigten Verbindungen zwischen den Öffnungen 5 und 47 bzw. 5 und 4 über die Ringräume des Kolbens hergestellt werden.

Dieses Umschaltventil hat gegenüber den Ausführungsbeispielen der Fig. 1 bis 5 noch eine weitere Einlaßöffnung 47 sowie einen Kolben mit zwei Ringräumen 13 und 48. Die Einlaßöffnung 3 dient ausschließlich dazu, Druckmittel für das Umschalten des Kolbens zuzuführen, nicht jedoch irgendeinen Steuerdruck für die Bremszylinder. Der Steuerdruck für die Bremszylinder wird vielmehr über die Einlaßöffnung 47 dem Ringraum 48 zugeführt, der bei umgeschaltetem Ventil die Einlaßöffnung 47 mit der Auslaßöffnung 5 verbindet. Ist das Umschaltventil in Ruhestellung, so sind die Einlaßöffnung 4 und die Auslaßöffnung 5 über den Ringraum 13 miteinander verbunden. Auch hier gleitet beim Umschalten die Bohrung 12 an der Auslaßöffnung 5 vorbei, um die kurzzeitige Entlüftung zur Atmosphäre sicherzustellen. Der Ringraum 48 ist durch die Dichtung 9 und eine weitere Dichtung 49 abgedichtet. Der Ringraum 13 ist durch die beiden Dichtungen 10 und 11 abgedichtet. Die Bohrung 12 liegt auch hier zwischen den Dichtungen 9 und 10. Auch bei diesem Umschaltventil können - entsprechend dem Ausführungsbeispiel der Fig. 1 bis 3 -Leitschaufeln vorhanden sein, die bewirken, daS der Ventilkolben 6 bei jedem Umschalten in die Arbeitsstellung etwas gedreht wird. In diesem Falle müßte die Einlaßöffnung 3 wiederum so gelegt werden, daß Druckmittel im wesentlichen quer zur Längsachse exzentrisch einströmt und die Flügel mit einem Druckimpuls beaufschlagt.

Fig. 8 zeigt eine zweikreisige Bremsanlage mit einem Umschaltventil gemäß dem Ausführungsbeispiel der Fig. 7. Die Einlaßöffnung 3 des Umschaltventiles 30 ist über ein Umschalt-Magnetventil 46, das von dem elektronischen Steuergerät 24 betätigt wird, mit dem vollen Druck des zweiten Druckluftbehälters 21 beaufschlagt. Sobald also das Bremspedal 23 betätigt wird und die elektronische Steuerung 24 dieses erkennt, wird der volle Vorratsdruck zum Umschalten des Umschaltventiles verwendet und nicht nur - wie beim Ausführungsbeispiel der Fig. 6 - der eingesteuerte Bremsdruck. Dieser wird vielmehr über das vom elektronischen Steuergerät 24 gesteuerte Proportionalventil 40 dem Einlaß 47 zugeführt. Ist das Umschaltventil aktiv betätigt, so gelangt der durch das Proportionalventil 40 eingesteuerte Bremsdruck über die Einlaßöffnung 47 und den Ringraum 48 zu dem Auslaß 5 und von dort über das Relaisventil 31 zu den Hinterachsbremsen.

Ist dagegen die elektronische Bremse gestört, so bleibt das Umschaltventil in seiner Ruhestellung und der vom Fahrerbremsventil 22 pneumatisch eingesteuerte Druck gelangt über den Einlaß 4, den Ringraum 13 und die Auslaßöffnung 5 zu dem Relaisventil 31 und von dort zu den Hinterachsbremsen. Im Ausführungsbeispiel der Fig. 8 wird für die Anhängerbremse kein weiteres Umschaltventil verwendet. Statt dessen ist hier nur das elektronisch gesteuerte Proportionalventil 41 vorgesehen, das bei funktionierender elektronischer Bremse den eingesteuerten Druck zu dem Anhängersteuerventil 37 leitet. Ist die elektronische Bremse dagegen ausgefallen, so wird der in der pneumatischen Leitung 25 eingesteuerte Druck über eine Leitung 52 dem Anhängersteuerventil 37 zugeführt und von dort zur Anhängerbremse geleitet. Das Proportionalventil 41 kann gegenüber dem auf der Leitung 52 anstehenden Druck also nur eine Druckerhöhung erwirken. Wie auch im Ausführungbeispiel der Fig. 6 ist noch eine Feststellbremse vorgesehen, und zwar durch ein Betätigungsventil 53, das Druck für ein Hinterachsfeststellbremsventil 50 liefert sowie an das Anhängersteuerventil 37.

## Patentansprüche

1. Umschaltventil für mehrkreisige Bremsanlagen von Kraftfahrzeugen mit einem ersten Anschluß, den Druckmittel zum Umschalten des Umschaltventiles zuführbar ist sowie mit einem Einlaß und einem Auslaß, die in Abhängigkeit von der Schaltstellung des Ventiles pneumatisch miteinander verbunden oder pneumatisch voneinander getrennt sind,
**dadurch gekennzeichnet,**
daß das Umschaltventil als Schieberventil ausgebildet ist und einen in einer Kammer (2) eines Gehäuses (1) verschieblichen Kolben (6) aufweist, der durch eine Feder (8) in eine Ruhestellung bringbar ist,
daß der Kolben (6) an seinem Außenumfang eine in Axialrichtung beidseitig abgedichtete (10, 11) Ausnehmung aufweist, die zusammen mit der Innenwandung der Kammer (2) einen Ringraum (13) bildet,
daß die axiale Länge dieses Ringraumes (13) und der axiale Versatz einer Einlaßöffnung (4) und einer Auslaßöffnung (5) so gewählt sind, daß in Ruhestellung des Kolbens (6) die Einlaßöffnung (4) und die Auslaßöffnung (5) über den Ringraum (13) miteinander in Strömungsverbindung stehen, daß ein weiterer Einlaß (3) zur Kammer (2) vorgesehen ist, durch den die Kolbenfläche des Kolbens (6) mit Druckmittel beaufschlagbar ist, wobei dieser weitere Einlaß (3) und der Auslaß (5) in Axialrichtung so angeordnet sind, daß dieser Einlaß (3) und der Auslaß (5) in Ruhestellung des Kolbens (6) voneinander abgetrennt und in Arbeitsstellung des Kolbens (6) miteinander in Strömungsverbindung stehen und daß der Kolben (6) einen oder mehrere in gleicher axialer Höhe liegende Bohrungen (12) aufweist, die in beide axiale Richtungen gegenüber der Innenwand der Kammer (2) abgedichtet (9, 10) sind, wobei diese Bohrungen (12) in solcher angeordnet sind, daß sie bei Bewegung des Kolbens (6) von der Ruhe- in die Arbeitsstellung und zurück mit der Auslaßöffnung (5) fluchten.

2. Umschaltventil nach Anspruch 1,
**dadurch gekennzeichnet,**
daß der Kolben (6) gegenüber der Innenwandung der Kammer (2) durch O-Ringe (9, 10, 11, 49) abgedichtet ist.

3. Umschaltventil nach Anspruch 1 oder 2,
**dadurch gekennzeichnet,**
daß am Kolben (6) mehrere in Axialrichtung abstehende Flügel (18) angebracht sind und daß der Einlaß (3) exzentrisch in die Kammer (2) mündet derart, daß über diesen Einlaß (3) zugeführtes Druckmittel die Flügel (18) beaufschlagt, was eine Drehung des Kolbens (6) bewirkt.

4. Umschaltventil nach Anspruch 3,
**dadurch gekennzeichnet,**
daß in der Kammer (2) ein Anschlag (16) vorhanden ist, gegen den der Kolben (6) durch die Feder (8) gedrückt wird und daß der Abstand zwischen dem Anschlag (16) und einer Stirnwand der Kammer (2) geringfügig größer ist als die axiale Länge der Flügel (18).

5. Umschaltventil nach einem der Ansprüche 1 bis 4,
**dadurch gekennzeichnet,**
daß der Kolben (6) zwei axial zueinander versetzt angeordnete Ausnehmungen aufweist, die zusammen mit der Innenwand der Kammer (2) je einen Ringraum (13 und 48) bilden und daS das Gehäuse (1) einen zusätzlichen Einlaß (3) aufweist, der die Kolbenfläche des Kolbens (6) mit Druckmittel beaufschlagt, wobei dieser zusätzliche Einlaß (3) in allen Betriebsstellungen des Kolbens (6) von den übrigen Ein- und Auslässen (47, 5, 4) abgetrennt ist.

## Claims

1. Reversing valve for multi-circuit brake systems in motor vehicles, comprising a first connector for supply with a pressurised medium for reversing the reversing valve, as well as an inlet and an outlet which are either pneumatically connected to each other or pneumatically isolated from each other, depending on the switching position of the valve,
**characterized in**
that said reversing valve is configured as gate valve and includes a piston (6) displaceable in a chamber (2) of a housing (1), which piston may be carried into an idle position by means of a spring (8),
that said piston (6) presents on its outer periphery a recess sealed (10, 11) on either side along the axial direction, which recess co-operates with the inner wall of said chamber (2) so as to form an annular space (13),
that the axial length of said annular space (13) and the axial offset of an inlet opening (4) and an outlet opening (5) are so selected that when said piston (6) is in its idle position said inlet opening (4) communicates with said outlet opening (5) through said annular space (13), that another inlet (3) into said chamber (2) is provided through which the piston surface of said piston (6) may be loaded with the pressurised medium, with this further inlet (3) and said outlet (5) being arranged along the axial direction in a way that this inlet (3) and said outlet (5) are separated from each other, with said piston (6) being in its idle position, and communicate with each other when said piston (6) is in its operative position, and that said piston (6) includes one or more bores (12) at the same axial level, which bores are both sealed (9, 10) in axial directions opposite the inner wall of said chamber (2), with these bores (12) being so disposed that they are aligned with said outlet opening (5) when said piston moves (6) out of its idle position into its operative position and in the opposite direction.

2. Reversing valve according to Claim 1,
**characterized in**
that said piston (6) is sealed by means of O-rings (9, 10, 11, 49) from the inner wall of said chamber (2).

3. Reversing valve according to Claim 1 or 2,
**characterized in**
that several wings (18) are mounted on said piston (6) which project in the axial direction, and that said inlet (3) opens into said chamber (2) eccentrically in a way that pressurised medium supplied through this inlet (3) acts upon said wings (18) so as to cause a rotation of said piston (6).

4. Reversing valve according to Claim 3,
**characterized in**
that a stop (16) is provided in said chamber (2), against which said piston (6) is biased by said spring (8), and that the distance between said stop (16) and a front wall of said chamber (2) slightly exceeds the axial length of said wings (18).

5. Reversing valve according to any of the Claims 1 to 4,
**characterized in**
that said piston (6) includes two recesses disposed with a relative axial offset, which co-operate with the inner wall of said chamber (2) so as to form a respective annular space (13 and 48), and that said housing (1) includes an additional inlet (3) which causes the pressurised medium to act upon the piston surface of said piston (6), with this additional inlet being isolated from the remaining inlets and outlets (47, 5, 4) when said piston (6) is in any of its operative positions.

## Revendications

1. Soupape d'inversion pour systèmes de freinage à plusieurs circuits d'automobiles, comprenant un premier raccord d'alimentation en un milieu sous pression à invertir la soupape d'inversion, ainsi qu'une orifice d'admission et une orifice d'émission, qui sont soit reliées l'une à l'autre de façon pneumatique, soit séparée l'une de l'autre de façon pneumatique, selon la position de commutation de la soupape,
**caractérisée en ce**
que ladite soupape d'inversion est configurée comme soupape à coulisse et comprend un piston (6) déplaçable à l'intérieur d'une chambre (2) d'une boîte (1), ce piston étant apte à être porté dans une position d'arrêt moyennant un ressort (8),
que ledit piston (6) comprend, à sa périphérie extérieure, un creux étanche (10, 11) des deux côtés en sens axial, lequel creux coopère avec la paroi intérieure de ladite chambre (2) afin de former un espace annulaire (13),
que la longueur axiale dudit espace annulaire (13) et le déport axial d'une orifice d'admission (4) et d'une orifice d'émission (5) sont choisis de façon que, quand ledit piston (6) se trouve en sa position d'arrêt, ladite orifice d'admission (4) est en communication avec ladite orifice d'émission (5) par ledit espace annulaire (13), qu'une autre orifice d'admission (3) dans ladite chambre (2) est réalisée, par laquelle la surface de piston dudit piston (6) peut être chargée avec le milieu sous pression, cette orifice d'admission (3) additionnelle et ladite orifice d'émission (5) étant disposées en sens axial de façon que cette orifice d'admission (3) et ladite orifice d'émission (5) soit isolées l'une de l'autre, quand ledit piston (6) se trouve en sa position d'arrêt, et soit en communication l'une avec l'autre, quand ledit piston (6) se trouve en sa position de service, et que ledit piston (6) comprend un ou plusieurs perçages (12) au même niveau axial qui sont étanches (9, 10), tous les deux, en sens axiaux en face de la paroi intérieure de ladite chambre (2), ces perçages (12) étant disposés de façon qu'ils s'alignent sur ladite orifice d'émission (5) quand ledit piston se déplace (6) de sa position d'arrêt en sa position de service, et en sens inversé.

2. Soupape d'inversion selon la revendication 1,
**caractérisée en ce**
que ledit piston (6) est rendu étanche, moyennant des joints toriques d'étanchéité (9, 10, 11, 49), relativement à la paroi intérieure de ladite chambre (2).

3. Soupape d'inversion selon la revendication 1 ou 2,
**caractérisée en ce**
que plusieurs ailes (18) sont montées sur ledit piston (6), qui font saillie en sens axial, et en ce que ladite orifice d'admission (3) s'ouvre dans ladite chambre (2) de façon excentrique que du milieu sous pression, qui est alimenté à travers cette orifice d'admission (3) agisse sur lesdites ailes (18) afin d'induire une rotation dudit piston (6).

4. Soupape d'inversion selon la revendication 3,
**caractérisée en ce**
qu'une butée (16) est disposée dans ladite chambre (2), contre laquelle ledit piston (6) est pressé par ledit ressort (8), et en ce que la distance entre ladite butée (16) et une paroi avant de ladite chambre (2) est un peu plus grande que la longueur axiale desdites ailes (18).

5. Soupape d'inversion selon une quelconque des revendications 1 à 4,
**caractérisée en ce**
que ledit piston (6) comprend deux creux disposés à un déport axial relatif, qui, en coopération avec la paroi intérieure de ladite chambre (2), forment un espace annulaire respectif (13 et 48), et en ce que ledit carter (1) comprend une orifice d'admission (3) additionnelle, qui cause le milieu sous pression à agir sur la surface de piston dudit (6), cette orifice d'admission additionnelle étant isolée des autres orifices d'admission et d'émission (47, 5, 4) quand ledit piston (6) se trouve en une quelconque de ses positions de service.
